## Europäisches Patentamt
## European Patent Office
## Office européen des brevets

(19)

(11) Publication number: **0 038 091**
**B1**

(12) **EUROPEAN PATENT SPECIFICATION**

(45) Date of publication of patent specification: **25.07.84**

(51) Int. Cl.³: **A 63 C 5/12**

(21) Application number: **81200297.0**

(22) Date of filing: **13.03.81**

(54) Energy absorbing structure, esp. for skis.

(30) Priority: **20.03.80 BE 9754**

(43) Date of publication of application:
**21.10.81 Bulletin 81/42**

(45) Publication of the grant of the patent:
**25.07.84 Bulletin 84/30**

(84) Designated Contracting States:
**AT BE CH DE FR GB IT LI SE**

(56) References cited:
**DE - A - 1 428 863**
**DE - A - 1 578 762**
**DE - A - 2 237 164**
**DE - A - 2 623 382**
**DE - B - 1 107 137**
**FR - A - 2 099 443**
**FR - A - 2 437 225**

(73) Proprietor: **N.V. BEKAERT S.A.**
**Leo Bekaertstraat 1**
**B-8550 Zwevegem (BE)**

(72) Inventor: **Wieme, André**
**Hinnestraat 6**
**B-8550 Zwevegem (BE)**

(74) Representative: **Ryckeboer, Leo et al,**
**N.V. BEKAERT S.A. Leo Bekaertstraat 1**
**B-8550 Zwevegem (BE)**

Courier Press, Leamington Spa, England.

## Description

The present invention relates to an energy absorbing laminated sandwich structure with a low specific weight and with an increased damping capacity for mechanical vibrations. Damping of mechanical vibrations is often desirable e.g. to suppress nuisance by noise due to vibrations and often favours the fatigue resistance of the damped structures. The invention relates further particularly to a sliding shoe such as a ski comprising said laminated structure as a load bearing structure.

It is generally known to make light weight laminated structures comprising a honeycomb structure as a core layer which is covered on both sides with a rigid covering plate adhering thereto and consisting e.g. of plastic, either reinforced or not, veneer or metal. Particularly in DE—A—1.428.863 a laminated ski is described comprising a honeycomb core layer (A) with a sheet (22) of elastic material on both sides of the core layer and a rigid plate (B, C) on top of said sheets. (See figure 6 and page 6).

It is now an object of the invention to provide an integral laminated structure of this type with improved capacity of damping mechanical vibrations by providing a layer of elastomeric material as a bonding layer between the light weight core layer and the rigid plate or sheet disposed on at least one side of the said core and wherein the bonding layer comprises twisted fiber bundles embedded therein which extend over at least a part of the surface of this covered side. The core layer consists of a plurality of strips, locally connected to each other and delimiting intermediate spaces therebetween which extend across the thickness of the core.

A honeycomb structure is preferably used as core layer. By bonding the honeycomb to the covering plates by means of the elastomeric material instead of the usual curable adhesives, the strength of the structure decreases. This is due to the fact that the rubber is subject to a larger deformation under the same shearing stress as e.g. a cured (rigid) bonding layer on the base of epoxy resins would be. The incorporation of twisted fiber bundles in this elastomeric layer compensates to a substantial degree for this decrease of strength. Hence these bundles provide for a damping effect and at the same time for a reinforcing effect.

As already described in the Belgian patent 879.030 of Applicant, the absorption of the mechanical vibrations is partially due to the intrinsic damping capacity of the elastomeric material and partially to the friction and deformation of the fibres embedded in said material. In this patent is also mentioned that steel cords, embedded in rubber provide excellent damping properties in such laminated structures and that said properties still improve when a metal plate is bonded to the core structure. This patent was published on March 27, 1980 after the claimed priority date of the present application.

An additional advantage of the invention resides in its simple manufacturing method compared to presently known laminated structures wherein the bonding layer is mostly prepared on the base of a substrate comprising an incompletely cured (B-stage) epoxy resin. Further the elastomeric bonding layer according to the invention is often substantially cheaper and maintains its elastomeric (hence damping) behaviour after the bonding (e.g. by vulcanising) is accomplished.

The invention will now be illustrated by the description of the basic composition of a light weight laminated structure and of the composition and manufacture of a ski presenting a particular embodiment of the invention.

Figure 1 shows a cross section of the basic composition of a platelike light weight laminated structure.

Figure 2 is a schematic view in cross section of the composition of a ski.

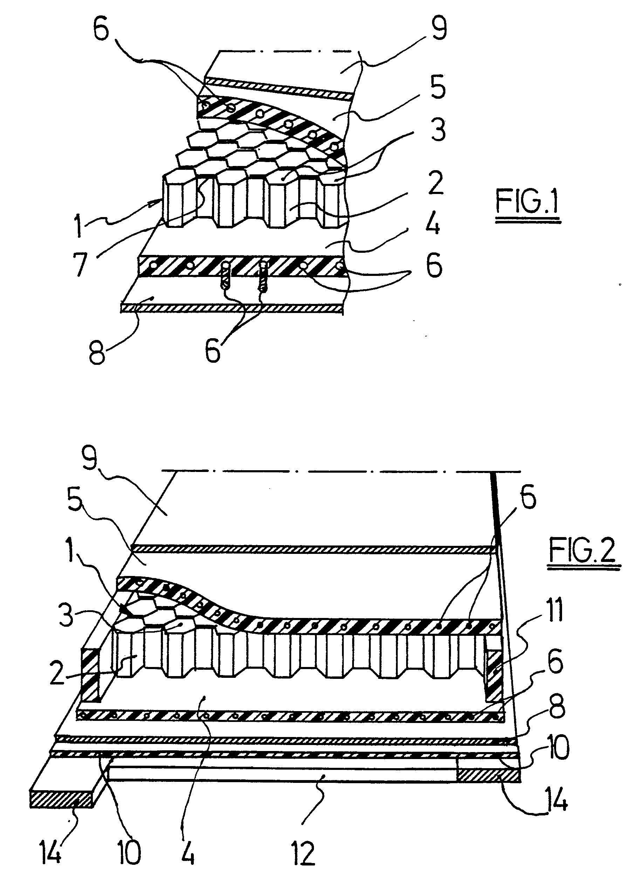

The laminated structure according to figure 1 consists of a core layer 1, e.g. a honeycomb structure comprising a number of strips 2 which are mutually connected to each other in the areas 7. Intermediate spaces 3 are located between subsequent strips 2. The core layer 1 is provided on at least one side with an elastomeric bonding layer 4 in which twisted fiber bundles 6 are incorporated in a mutual parallel arrangement. A similar bonding layer 5 is applied to the other side of the core layer. This layer 5 can also contain twisted fiber bundles 6 when desirable. The layers 4, 5 are covered with and bonded to a rigid plate 8, 9, which is often a metal plate.

The strips 2 can in principle consist of any plate — or sheetlike material with a certain rigidity such as paper (cardboard), plastic (either reinforced or not), metal foil or metal sheet etc. The shape and cross dimensions of the free spaces or cells 3 can be chosen in view of the required thickness, strength, cost and/or weight of the core layer. The dimensions of cells 3 should not be uniform; they must be different in predetermined areas of the laminated structure. They may be filled, at least partially, with e.g. foam. The strips can be arranged obliquely with respect to the planes of the laminated structure or even parallel thereto in certain areas instead of perpendicular thereto.

The composition of the bonding layers 4, 5 shall be determined to provide a good adhesion to the strip portions with which they have contact as well as to the fiber bundles and to the contact planes with the rigid covering plates 8, 9. Further, at least one of the layers 4 or 5 comprising the embedded fiber bundles should maintain its elastomeric character to obtain the damping effect contemplated. Hence, when a rubber sheet is used as elastomeric bonding layer, it may be necessary to coat it with a specific adhesion promoting agent versus the plates 8 or 9. The adhesive power and the flexibility of the bonding layers will preferably remain active in a wide temperature range, e.g. between −40°C and 120°C. Elastomeric plastics can also be used, such as e.g. elastic adhesives on the basis of epoxy resins and with a high elongation capacity.

To compensate for the decrease in strength (by the application of elastomeric materials instead of the usual bonding substances which are cured) it will often be desirable to reinforce the elastomeric material additionally, e.g. with a fiberlike filler material.

The twisted fiber bundles in the bonding layer preferably have a high tensile strength ($\geq 2000$ N/mm$^2$) and a high tensile modulus of elasticity ($\geq 7.10^4$ N/mm$^2$). Suitable fibers thus are glass fibers, carbon fibers, boron fibers, polyamide fibers, polyaramid fibers, polyester fibers and/or metal fibers or filaments in the form of cords or cables. The tensile modulus shall preferably be chosen to substantially correspond (same order of magnitude) with that of the plate bonded thereto. The thickness of the bonding layer will be between 1,33 and 4 times the thickness or diameter of the fiber bundles. The twisted fiber bundles, e.g. steel cords can extend over the whole or part of the whole surface of the laminated structure. When fiber bundles are used in both the upper, resp. lower bonding layer 5, 4, they can be oriented in a different direction. The direction of the cords in layer 4 can e.g. be perpendicular to that of the cords in layer 5. In certain cases it might be useful to choose cords with a substantial elongation at rupture ($> 5\%$). The cords can also be applied in the form of a woven fabric, whereby running in warp and/or weft direction. The cords can also improve the strength of the laminated structure, when the other constituents have a relatively low strength. For this purpose it is also possible to incorporate two cord layers in one or both bonding layers with different cord orientations. The incorporation of the cords has further the additional effect that the borders of the strips 2 in contact with layers 4 and 5 do not cut therethrough during the compression of the covering plates 8 and 9 thereon. The continuity of the bond over the whole surface between plates 8 and 9 and core structure 1 is thus ensured.

The light weight laminated structure according to the invention can also have other shapes than that of a flat plate, e.g. it can be a curved or undulated plate, a plate with changes in thickness over its surface, a profiled lath or a tube. These structures can e.g. be used as bearing frames or elements for vibration sensitive instruments and devices e.g. in engine rooms, in airplanes or ships, for loudspeaker boxes and other sport goods (skate boards, tennis rackets) etc. In general the light weight laminated structure according to the invention will be very well suited in applications wherein damping requirements are made besides specific requirements regarding strength and weight. The concept of the invention is particularly advantageous if it is desired to realize an object or structure with a certain springiness under bending load as e.g. in skis and next to the combination of requirements strength/weight/damping. The invention is also useful for application in other sports goods such as tennis rackets and skate boards.

Example

In figure 2 a cross section is shown of a ski with improved damping properties as a specific example of an embodiment of the invention. The ski has as a bearing structure a light weight laminated structure comprising a honeycomb structure 1 from aluminium foil (origin: Hexel type 1/8 — 5052—0007) as a core layer and covered on its underside with a rubber strip 4 with a thickness of about 0,8 mm. In the rubber strip 4 having a width (70 mm) equal to that of the ski, 50 longitudinally arranged steel cords 6 are embedded which cords have a construction $4 \times 0,175$ (i.e. 4 brass coated steel filaments each having a diameter of 0,175 mm), a tensile modulus of $20.10^4$ N/mm$^2$, a tensile strength of 2700 N/mm$^2$ and an elongation at rupture of about 1,5%. The upper side of the honeycomb structure is covered with a similar rubber sheet 5. To the thus coated core layer is then bonded on the underside, resp. the upper side a plate 8, resp. 9 from an aluminium-alloy: type ZICRAL or type 7075T6 and having a thickness of about 0,6 to 1 mm (tensile strength about 550 N/mm$^2$) or from steel with a thickness of about 0,25 to 0,35 mm (tensile strength about 1600 N/mm$^2$). The honeycomb structure is cut beforehand to a shape close to the ultimate shape of the ski. Its thickness in the middle of the ski amounts to about 1,5 cm. When rapping on this bearing structure, it sounds dull, which indicates excellent damping. The manufacture of the ski in a mould as described hereinafter and with rubber sheets on the core layer offers the advantage that the shape of the core layer, as obtained by cutting should not be very precise because the elastomeric material compensates for the irregularities in the cut shape during the bonding treatment.

The ski is built up and consolidated in a mould to a solid structure with the desired shape in a very simple and cheap manner. Conventional preformed steel edges 14 and between them a polyethylene runner 12 cut to the appropriate size are placed in the bottom of the mould. On top of the steel edges 14 and runner 12 a rubber sheet 10 (eventually reinforced with e.g. cords) is disposed and on top thereof is placed the aluminium or steel plate 8 which on its turn is covered with the rubber layer 4 comprising the steel cords. Next, rubber strips or temperature resistant plastic strips 11 are arranged against the longitudinal upright walls of the mould. Further the honeycomb structure 1 (Hexel) is placed interbetween these strips 11. The whole structure is again covered with a rubber sheet 5 comprising steel cords 6 and further covered with a second aluminium or steel plate 9. This plate 9 can be imprinted, painted or otherwise coated with a finishing layer or design if desired. The mould is subsequently closed and heated for a sufficient time at about 150°C (depending from the rubber composition) to bond the different layers to each other. After this consolidation treatment the ski can be removed from the mould.

It is also possible to have the rubber elements 5 and 11 (or 4 and 11) assembled in the form of one single sheet comprising a longitudinal area 4, 5 in its center (and in which the steelcords 6 are embedded), which area is provided at both sides with two longitudinal strips 11 (preferably somewhat thicker) said strips having a width corresponding to the height of the upright walls of the ski. In this case the manufacturing process can start by putting plate 9 in the bottom of the mould and covering it with the rubber-sheet comprising elements 5, 6 and 11 with the strips 11 upright against the longitudinal walls of the mould. Next the honeycomb structure is placed in the mould and the assembly is covered with sheet 4, 6, plate 8 and sheet 10. Finally the steel edges 14 are placed in the upper lateral corners of the mould and the runner 12 between them. The mould is then closed.

The rubber sheets comprising elements 4, 6 and 5, 6 or 4, 6, 11 resp. 5, 6, 11 can be obtained in the usual manner by extrusion through a die slot. A number of parallel steel cords 6 is then embedded therein during extrusion. The steel cords 6 can also be supplied in the form of a woven fabric (steelcord in warp direction or in weft or both in warp and weft if desirable). To increase the strength of the ski, it can be useful to reinforce the ski side portions (11) in another manner. It is in general also possible to incorporate steel cords only in a part of the surface of sheet 4 (or 5) or otherwise to apply local reinforcements in another form than twisted fiber bundles.

To provide an excellent bonding of the rubber layer to the core layer it can be advantageous to provide a composite rubber layer with a foam rubber structure on the rubber layer side facing the core layer. This can be achieved by coextruding a normal rubber composition (while embedding fiber bundles therein) next to a rubber layer containing a foam generating agent. The foaming then occurs in this composite rubber layer during the bonding treatment by vulcanisation. In this way the anchoring of the rubber layer occurs through a greater depth in the surface portions of the honeycomb structure.

## Claims

1. An integral laminated structure comprising a core layer (1) consisting of a plurality of strips (2) locally connected to each other and delimiting intermediate spaces (3) therebetween which extend across the thickness of the core, at least one surface of the core layer (1) being covered with a layer (4, 5) of elastomeric material, and a rigid plate (8, 9) bonded to the layer (4, 5) of elastomeric material on its side opposite to the core layer (1), characterized in that twisted fiber bundles are embedded in the layer (4, 5) of elastomeric material, and the layer (4, 5) of elastomeric material is directly bonded to both the core layer (1) and the rigid plate (8, 9).

2. Structure according to claim 1, wherein the core layer (1) comprises a honeycomb structure.

3. Structure according to claim 1 or 2, wherein the modulus of elasticity of the rigid plate and of the embedded fiber bundles have the same order of magnitude.

4. Structure according to claim 3, wherein this modulus of the embedded fiber bundles is at least $7.10^4 \, N/mm^2$ whereas their tensile strength is at least $2000 \, N/mm^2$.

5. Structure according to claim 4, wherein the twisted fiber bundles are steel cords.

6. Structure according to any of the previous claims, wherein the rigid plate is a metal plate.

7. Structure according to any of claims 1 to 5, wherein the rigid plate is a glass fiber reinforced resin sheet.

8. Structure according to any of the previous claims wherein the thickness of the layer of elastomeric material is between 1,33 and 4 times the fiber bundle diameter.

9. Structure according to any of the previous claims wherein the layer of elastomeric material at its side facing the core layer has a foam structure.

10. Sliding shoe, such as a ski, characterized in that it comprises as a bearing structure an integral laminated structure according to any of the previous claims.

## Patentansprüche

1. Integrierter, mehrlagiger Aufbau mit einer Kernschicht (1), die aus einer Vielzahl von Streifen (2), die örtlich miteinander verbunden sind, sowie dazwischenliegenden, abgrenzenden Zwischenräumen (3) besteht, die sich über die Dicke des Kerns erstrecken, wobei zumindest eine Oberfläche der Kernschicht (1) mit einer Schicht (4, 5) eines elastomeren Werkstoffs überzogen ist, und mit einer starren Platte (8, 9), die mit der Schicht (4, 5) des elastomeren Werkstoffs an jener Seite verklebt ist, die der Kernschicht (1) gegenüberliegt, dadurch gekennzeichnet, dass verdrillte Faserbündel in der Schicht (4, 5) des elastomeren Werkstoffs eingebettet sind, und dass die Schicht (4, 5) des elastomeren Werkstoffs direkt sowohl mit der Kernschicht (1) als auch der starren Platte (8, 9) verklebt ist.

2. Aufbau gemäss Anspruch 1, dadurch gekennzeichnet, dass die Kernschicht (1) einen wabenförmigen Aufbau besitzt.

3. Aufbau gemäss Anspruch 1 oder 2, dadurch gekennzeichnet, dass der Elastizitätsmodul der starren Platte und der eingebetteten Faserbündel die gleiche Grössenordnung besitzt.

4. Aufbau gemäss Anspruch 3, dadurch gekennzeichnet, dass dieser Modul der eingebetteten Faserbündel zumindest 7.10 N/mm beträgt, während ihre Zugfestigkeit zumindest 2000 N/mm beträgt.

5. Aufbau gemäss Anspruch 4, dadurch gekennzeichnet, dass die verdrillten Faserbündel Stahlseile sind.

6. Aufbau gemäss irgendeinem der bisherigen Ansprüche, dadurch gekennzeichnet, dass die starre Platte eine Metallplatte ist.

7. Aufbau gemäss irgendeinem der Ansprüche 1 bis 5, dadurch gekennzeichnet, dass die starre Platte einen glasfaserverstärkte Harzfolie ist.

8. Aufbau gemäss irgendeinem der bisherigen Ansprüche, dadurch gekennzeichnet, dass die Dicke der Schicht des elastomeren Werkstoffs zwischen dem 1,33-fachen und dem 4-fachen des Faserbündeldurchmessers liegt.

9. Aufbau gemäss irgendeinem der bisherigen Ansprüche, dadurch gekennzeichnet, dass die Schicht des elastomeren Werkstoffs an der der Kernschicht gegenüberliegenden Seite einen geschäumten Aufbau besitzt.

10. Gleitschuh, z.B. ein Schi, dadurch gekennzeichnet, dass er als Tragaufbau einen integrierten, mehrlagigen Aufbau gemäss irgendeinem der bisherigen Ansprüche enthält.

## Revendications

1. Structure lamellée intégrale comprenant une couche centrale (1) consistant en un ensemble de bandes (2) reliées entre elles par endroits en délimitant des espaces intermédiaires (3) qui s'étendent sur toute l'épaisseur de la couche centrale, une couche de matériau élastomérique (4, 5) recouvrant au moins une des surfaces de la couche centrale (1) et une plaque rigide (8, 9) adhérant à la couche de matériau élastomérique (4, 5) par le coté opposé à la couche centrale (1), caractérisé en ce que des faisceaux de fibres torsadées sont inclus dans la couche de matériau élastomérique (4, 5) et que la couche de matériau élastomérique (4, 5) adhère directement à la fois à la couche centrale (1) et à la plaque rigide (8, 9).

2. Structure selon la revendication 1, où la couche centrale (1) comporte une structure en nid d'abeilles.

3. Structure selon la revendication 1 ou 2, où le module d'élasticité de la plaque rigide et des faisceaux de fibres inclus dans la couche (4, 5) ont le même ordre de grandeur.

4. Structure selon la revendication 3, où le module des faisceaux de fibres inclus dans la couche (4, 5) est d'au moins 7.10 N/mm, tandis que leur résistance à la traction est d'au moins 2000 N/mm.

5. Structure selon la revendication 4, où les faisceaux de fibres torsadées sont des cordes en acier.

6. Structure selon l'une quelconque des revendications précédentes, où la plaque rigide est une plaque en métal.

7. Structure selon l'une quelconque des revendications 1 à 5, où la plaque rigide est une plaque en résine renforcée de fibres de verre.

8. Structure selon l'une quelconque des revendications précédentes, où l'épaisseur de la couche de matériau élastomérique se situe entre 1,33 et 4 fois le diamètre des faisceaux de fibres.

9. Structure selon l'une quelconque des revendications précédentes, où la couche de matériau élastomérique a une structure expansée sur le côté faisant face à la couche centrale.

10. Soulier glissant tel qu'un ski, caractérisé en ce qu'il comporte comme structure de support de poids une structure lamellée selon l'une quelconque des revendications qui précèdent.

FIG.1

FIG.2